# EUROPEAN PATENT APPLICATION

(11) **EP 4 013 082 A1**
(43) Date of publication of application: **15.06.2022**
(21) Application number: 20849716.4
(22) Date of filing: 10.07.2020
(51) Int. Cl.: H04W 4/24, H04L 12/14

(54) **CHARGING METHOD, APPARATUS AND SYSTEM**

(30) Priority: 06.08.2019 CN 201910720712
(71) Applicant: ZTE Corporation, Shenzhen, Guangdong 518057 (CN)
(72) Inventor: LUO, Xujian, Shenzhen, Guangdong 518057 (CN)
(74) Representative: Mozzi, Matteo
(86) International application number: PCT/CN2020/101388
(87) International publication number: WO 2021/022974

(57) **Abstract**

A charging method, apparatus and system are provided. The charging method includes: receiving a first request message from a Network Function (NF), wherein the first request message carries following information: first Quality of Service (QoS) information; or second QoS information; or second QoS information and updated first QoS information; the first QoS information comprises requested QoS information or negotiated QoS information; and the second QoS information comprises QoS information actually used after the NF sends a previous first request message; and performing charging according to the QoS information carried in the first request message. The embodiments of the present disclosure are based on actually used QoS information and/or updated requested or negotiated QoS information. Since the actually used QoS information and/or updated requested or negotiated QoS information can better reflect the QoS actually obtained by the user, the charging accuracy is improved.

## Description

### Technical Field

Embodiments of the present invention relate to, but are not limited to, the field of communications, and in particular, to a charging method, apparatus and system.

### Background

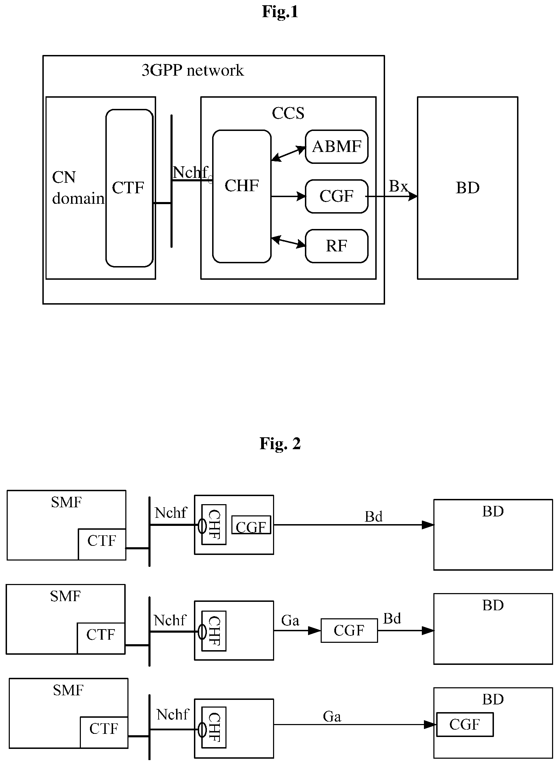

In a telecommunication network described in the 3^{rd} Generation Partnership Project (3GPP), a charging system is one of important functional components of the telecommunication network, and is an important guarantee for an operator to generate revenue. Fig. 1 is a schematic architecture diagram of a charging system in a 3GPP network. As shown in Fig. 1, the charging system includes a Charging Trigger Function (CTF) and a Converged Charging System (CCS).

The CTF is embedded in each core network element (including an access layer network element, a control layer network element and a service layer network element) of a 3GPP network, and mainly realizes the functions of collecting charging information according to a monitored usage condition of a network resource, and sending the collected charging information to a Charging Function (CHF) via a Nchf interface (Service-based interface exhibited by Charging Function).

The CCS includes a CHF, an Account Balance Management Function (ABMF), a Rating Function (RF) and a Charging Gateway Function (CGF).

The CHF is mainly responsible for receiving a Charging Data Request message sent by a CTF; for online charging, interacting with an RF to perform charging to obtain charging information, interacting with an ABMF to acquire account balance information and perform deduction according to the charging information; and constructing a Charging Date Record (CDR), and sending the CDR to a CGF.

The CGF is mainly responsible for storing and managing the CDR received from the CHF, and sending the CDR to a Charging Domain (BD) via a Bx interface.

For offline charging, the BD charges according to the CDR.

Fig. 2 shows three CGF deployment modes for achieving converged charging under a connected domain of 5G data in a 3GPP network. A Session Management Function (SMF) is a main network element for generating charging information in a 5G network, and sends a charging message to a CHF through an embedded CTF. The three CGF deployment modes are: the CGF and the CHF being deployed in one piece, the CGF being deployed independently, and the CGF being deployed in a BD. When the CGF and CHF are deployed in one piece, the CGF sends the CDR to a BD via a Bd interface. When the CGF is deployed independently, the CHF sends the CDR to the CGF via a Ga interface, and the CGF sends the CDR to the CGF via a Bd interface. When the CGF is deployed in the BD, the CHF sends the CDR to the CGF via a Ga interface.

Currently, 2G, 3G, and 4G communication networks are generally used in application scenarios such as voice communication and data communication, and therefore charging is mostly performed based on duration, traffic, or the type of a used service, and thus is relatively simple. In future 5G communication networks, application scenarios will be more diversified. The 5G communication has characteristics of high speed (for example, in Enhance Mobile Broadband (eMBB)), large capacity (for example, in massive Machine Type of Communication (mMTC)), and low latency (for example, in Ultra Reliable Low Latency Communication (URLLC)). Different applications of 5G have different requirements on the network. For example, industrial control has a high requirement on time delay, the Internet of Things requires large capacity, but does not have a high requirement on time delay or rate, and watching 4K or 8K videos requires large bandwidth and high rate. According to the current design in the industry, a 5G network has different slices, which can provide different service capabilities for meeting different application requirements. However, different resources are required for providing different network service capabilities and different quality of service, therefore, from the perspective of an operator, a service provider, or a consumer, performing charging according to different network services and different quality of service is more reasonable than simply performing charging according to duration and traffic.

In the current 3GPP specification, Quality of Service (QoS) information has been defined in the charging message of the 5G charging protocol (TS32.255, 32.291, 32.298), but only the rate and packet loss ratio information is defined, and time delay and jitter information has not yet been defined. Furthermore, charging is performed only on the basis of the requested or negotiated QoS, but in practice, the QoS may not reach the requested or negotiated QoS, which substantially does not satisfy the service requirements of the user, harms the interests of the user, and reduces the satisfaction degree of the user on the service. Hence, if charging is performed according to the current charging information (traffic, duration, etc.), charging cannot be performed accurately according to the application scenario and quality of service of the 5G.

### Summary

Some embodiments of the present invention provide a charging method, apparatus and system, which can improve charging accuracy.

Some embodiments of the present invention provide a charging method, including:
receiving a first request message from a Network Function (NF), wherein the first request message carries following information: first QoS information; or second QoS information; or second QoS information and updated first QoS information; the first QoS information comprises requested QoS information or negotiated QoS information; and the second QoS information comprises QoS information actually used after the NF sends a previous first request message; and
performing charging according to the QoS information carried in the first request message.

Some embodiments of the present invention provide a charging method, including:
in a case where a preset condition is satisfied, sending a first request message to a charging network element, wherein the first request message carries following information: first QoS information; or second QoS information; or second QoS information and updated first QoS information; the first QoS information comprises requested QoS information or negotiated QoS information; and the second QoS information comprises QoS information actually used after an NF sends a previous first request message.

Some embodiments of the present invention provide a charging apparatus, including a processor and a computer-readable storage medium, wherein the computer-readable storage medium stores an instruction, and the instruction, when being executed by the processor, implements the forgoing charging method.

Some embodiments of the present invention provide a computer-readable storage medium, on which a computer program is stored, wherein the computer program, when being executed by a processor, implements operations of the foregoing charging method.

Some embodiments of the present invention provide a charging apparatus, including:
a first receiving module, configured to receive a first request message from an NF, wherein the first request message carries following information: first QoS information; or second QoS information; or second QoS information and updated first QoS information; the first QoS information comprises requested QoS information or negotiated QoS information; and the second QoS information comprises QoS information actually used after the NF sends a previous first request message; and
a charging module, configured to perform charging according to the QoS information carried in the first request message.

Some embodiments of the present invention provide a charging apparatus, including:
a second sending module, configured to send a first request message to a charging network element in a case where a preset condition is satisfied, wherein the first request message carries following information: first QoS information; or second QoS information; or second QoS information and updated first QoS information; the first QoS information comprises requested QoS information or negotiated QoS information; and the second QoS information comprises QoS information actually used after an NF sends a previous first request message.

Some embodiments of the present invention provide a charging system, including:
an NF, configured to send a first request message to a charging network element in a case where a preset condition is satisfied, wherein the first request message carries following information: first QoS information; or second QoS information; or second QoS information and updated first QoS information; the first QoS information comprises requested QoS information or negotiated QoS information; and the second QoS information comprises QoS information actually used after the NF sends a previous first request message; and
a charging network element, configured to receive the first request message from the NF, wherein the first request message carries the following information: first QoS information; or second QoS information; or second QoS information and updated first QoS information; the first QoS information comprises requested QoS information or negotiated QoS information; and the second QoS information comprises QoS information actually used after the NF sends a previous first request message; and
perform charging according to the QoS information carried in the first request message.

According to the embodiments of the present invention, a first request message is received from an NF, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message; and charging is performed according to the QoS information carried in the first request message. The embodiments of the present invention are based on actually used QoS information and/or updated first QoS information. Since the actually used QoS information and/or updated first QoS information can better reflect the QoS actually obtained by the user, the charging accuracy is improved.

In some other embodiments of the present invention, the requested QoS information includes one or more of following information: a requested rate, a requested time delay, a requested jitter, and a requested packet loss rate; the negotiated QoS information includes one or more of following information: a negotiated rate, a negotiated time delay, a negotiated jitter, and a negotiated packet loss rate. The QoS information in the embodiments of the present invention is represented by more information, which can satisfy more 5G application scenarios, thereby further improving charging accuracy.

In some other embodiments of the present invention, the QoS information actually used after the NF sends a previous first request message includes one or more of following information actually used after the NF sends a previous first request message: a maximum rate, an average rate, a maximum time delay, an average time delay, a maximum jitter, an average jitter, a maximum packet loss rate, and an average packet loss rate. The QoS information in the embodiments of the present invention is represented by more information, which can satisfy more 5G application scenarios, thereby further improving charging accuracy.

Additional features and advantages of embodiments of the present invention will be set forth in the description which follows, and in part will be obvious from the description, or may be learned by implementation of embodiments of the present invention. The objects and other advantages of embodiments of the present invention can be realized and attained by the structure particularly pointed out in the description, claims and drawings.

### Brief Description of the Drawings

The accompanying drawings are used for providing a further understanding of the technical solutions of the embodiments of the present invention, and constitute a part of the description. The technical solutions of the embodiments of the present invention will be explained in the embodiments of the present invention with reference to the drawings. The drawings do not constitute a limitation to the technical solutions of the embodiments of the present invention.
Fig. 1 is a schematic architecture diagram of a charging system in a 3GPP network;
Fig. 2 shows three CGF deployment modes for achieving converged charging under a connected domain of 5G data in a 3GPP network;
Fig. 3 is a flowchart of a charging method according to an embodiment of the present invention;
Fig. 4 is a flowchart of a charging method according to another embodiment of the present invention;
Fig. 5 is a flowchart of a charging method according to a first embodiment of the present invention;
Fig. 6 is a flowchart of a charging method according to a second embodiment of the present invention;
Fig. 7 is a schematic structural diagram of a charging apparatus according to another embodiment of the present invention;
Fig. 8 is a schematic structural diagram of a charging apparatus according to another embodiment of the present invention;
Fig. 9 is a schematic structural diagram of a charging system according to another embodiment of the present invention.

### Detailed Description

Hereinafter, the embodiments of the present invention will be described in detail with reference to the accompanying drawings. It should be noted that the embodiments of the present invention and the features in the embodiments can be combined arbitrarily without conflicts.

Operations shown in the flowchart of the drawings may be performed in a computer system such as a set of computer executable instructions. Furthermore, although a logic sequence is shown in the flowchart, in some cases, the shown or described operations may be executed in a sequence different from that described here.

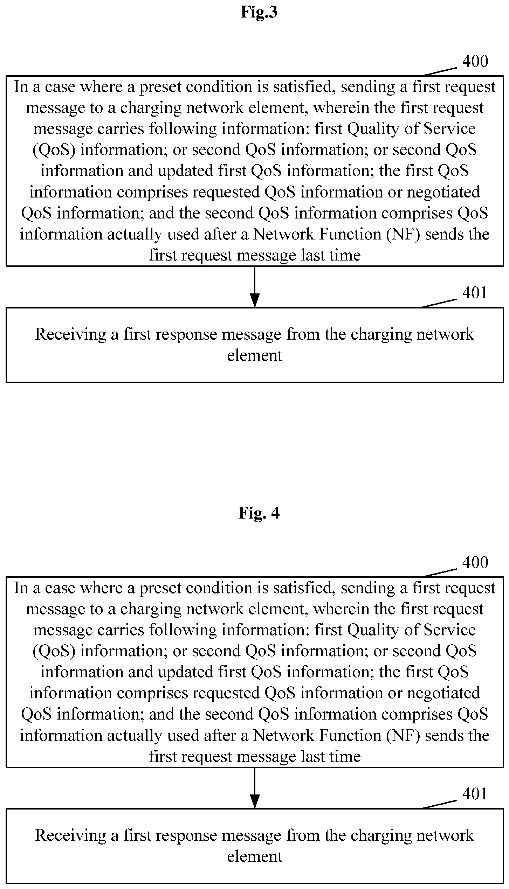

Referring to Fig. 3, an embodiment of the present invention provides a charging method, including operations 300 and 301.

At 300, a first request message is received from an NF. The first request message carries following information: first QoS information; or second QoS information; or second QoS information and updated first QoS information. The first QoS information includes requested QoS information or negotiated QoS information. The second QoS information includes QoS information actually used after the NF sends a previous first request message.

In the embodiment of the present invention, the NF may be any network function, such as an SMF.

In the embodiment of the present invention, the first request message may be any one of the following: an initial charging data request message (e.g., a Charging Data Request [Initial] message), an update charging data request message (e.g., a Charging Data Request [Update] message), or a termination charging data request message (e.g., a Charging Data Request [Termination] message).

As an exemplary implementation, in a case where the first request message is the initial charging data request message, the first request message carries the first QoS information.

As an exemplary implementation, in a case where the first request message is the update charging data request message, the first request message received for the first time carries QoS information actually used after the NF sends the initial charging data request message, or carries the QoS information actually used after the NF sends the initial charging data request message and first QoS information updated after the NF sends the initial charging data request message; and the first request message received subsequently carries QoS information actually used after the NF sends a previous update charging data request message, or carries the QoS information actually used after the NF sends a previous update charging data request message and first QoS information updated after the NF sends a previous update charging data request message.

As an exemplary implementation, in a case where the first request message is a termination charging data request message, the first request message carries the QoS information actually used after the last (final) update charging data request message sent by the NF.

In the embodiment of the present invention, the requested QoS information includes one or more of following information:
a requested rate, a requested time delay, a requested jitter, and a requested packet loss rate.

In the embodiment of the present invention, the negotiated QoS information includes one or more of following information:
a negotiated rate, a negotiated time delay, a negotiated jitter, and a negotiated packet loss rate.

In the embodiment of the present invention, the second QoS information includes one or more of following information actually used after the NF sends a previous first request message:
a maximum rate, an average rate, a maximum time delay, an average time delay, a maximum jitter, an average jitter, a maximum packet loss rate, and an average packet loss rate.

It should be noted that the QoS information actually used refers to a specific value of the QoS information actually used. For example, in a case where the QoS information includes a maximum rate, the QoS information actually used refers to a value of the maximum rate actually used; in a case where the QoS information includes a maximum rate and an average rate, the QoS information actually used refers to a value of the maximum rate actually used and a value of the average rate actually used; other cases may be deduced by analogy.

The QoS information in the embodiments of the present invention is represented by more information, which can satisfy more 5G application scenarios, thereby further improving charging accuracy.

At 301, charging is performed according to the QoS information carried in the first request message.

In the embodiment of the present invention, for online charging, the charging network element may perform charging according to the QoS information carried in the first request message; for offline charging, the CDR may be sent to the BD, and the BD performs charging according to the QoS information carried in the first request message.

In the embodiment of the present invention, charging may be performed according to the QoS information carried in the first request message in a plurality of manners.

For example, charging is performed according to the first QoS information or the first QoS information previously updated to obtain a charging base; a charging discount is calculated according to the second QoS information; and final charging is performed according to the charging base and the charging discount.

For another example, in a case where the second QoS information is lower than the first QoS information or the first QoS information previously updated, charging is performed according to the first QoS information or the first QoS information previously updated to obtain a charging base; a charging discount is calculated according to the second QoS information; and final charging is performed according to the charging base and the charging discount.

In a case where the second QoS information is higher than the first QoS information or the first QoS information previously updated, charging is performed according to the first QoS information or the first QoS information previously updated.

For still another example, the charging rate is calculated according to the first QoS information, the first QoS information previously updated, and the second QoS information, and charging is performed according to the charging rate.

Of course, the charging method is not limited to the foregoing listed examples, and may also be calculated in other manners. The specific charging method is not limited herein, and the listed examples are not intended to limit the scope of protection of the embodiment of the present invention.

In another embodiment of the present invention, the charging method further includes one or more of the following operations:
storing the QoS information carried in the first request message into a CDR; and
returning a first response message to the NF.

In the embodiment of the present invention, the first response message may be any one of the following:
an initial charging data response message, an update charging data response message, or a termination charging data response message.

The embodiments of the present invention are based on actually used QoS information and/or updated first QoS information. Since the actually used QoS information and/or updated first QoS information can better reflect the QoS actually obtained by the user, the charging accuracy is improved, and at the same time analysis data can be provided for a telecommunication operator to improve the QoS.

Referring to Fig. 4, another embodiment of the present invention provides a charging method, including an operation 400.

At 400, in a case where a preset condition is satisfied, a first request message is sent to a charging network element, wherein the first request message carries following information: first QoS information; or second QoS information; or second QoS information and updated first QoS information; the first QoS information includes requested QoS information or negotiated QoS information; and the second QoS information includes QoS information actually used after a NF sends a previous first request message.

In the embodiment of the present invention, the preset condition includes any one of:
reception of a second request message;
satisfying of a trigger condition;
reception of a third request message used for or serving a provider;
closing of a session.

In one exemplary implementation, the second request message is a resource usage request.

In one exemplary implementation, the third request message is a request message for adjusting the QoS, and the third request message carries updated requested or negotiated QoS information.

In the embodiment of the present invention, the first request message may be any one of the following: an initial charging data request message (e.g., a Charging Data Request [Initial] message), an update charging data request message (e.g., a Charging Data Request [Update] message), or a termination charging data request message (e.g., a Charging Data Request [Termination] message).

As an exemplary implementation, in a case where the first request message is the initial charging data request message, the first request message carries the first QoS information.

As an exemplary implementation, in a case where the first request message is the update charging data request message, a first request message received for the first time carries QoS information actually used after an initial charging data request message is sent, or carries the QoS information actually used after the initial charging data request message is sent and first QoS information updated after the initial charging data request message is sent; and the first request message received subsequently carries the QoS information actually used after a previous update charging data request message is sent, or carries the QoS information actually used after a previous update charging data request message is sent and the first QoS information updated after a previous update charging data request message is sent.

As an exemplary implementation, in a case where the first request message is a termination charging data request message, the first request message carries the QoS information actually used after the last (final) sent update charging data request message.

In the embodiment of the present invention, the requested QoS information includes one or more of following information:
a requested rate, a requested time delay, a requested jitter, and a requested packet loss rate.

In the embodiment of the present invention, the negotiated QoS information includes one or more of following information:
a negotiated rate, a negotiated time delay, a negotiated jitter, and a negotiated packet loss rate.

In the embodiment of the present invention, the second QoS information includes one or more of following information actually used after a previous first request message is sent:
a maximum rate, an average rate, a maximum time delay, an average time delay, a maximum jitter, an average jitter, a maximum packet loss rate, and an average packet loss rate.

It should be noted that the QoS information actually used refers to a specific value of the QoS information actually used. For example, in a case where the QoS information includes a maximum rate, the QoS information actually used refers to a value of the maximum rate actually used; in a case where the QoS information includes a maximum rate and an average rate, the QoS information actually used refers to a value of the maximum rate actually used and a value of the average rate actually used; other cases may be deduced by analogy.

The QoS information in the embodiments of the present invention is represented by more information, which can satisfy more 5G application scenarios, thereby further improving charging accuracy.

In the embodiment of the present invention, the charging network element is a Converged Charging System (CCS), an Offline Charging System (OFCS) or an Online Charging System (OCS).

In another embodiment of the present invention, the charging method further includes an operation 401.

At 401, a first response message is received from the charging network element.

In the embodiment of the present invention, the first response message may be any one of the following:
an initial charging data response message, an update charging data response message, or a termination charging data response message.

The embodiments of the present invention are based on actually used QoS information and/or updated first QoS information. Since the actually used QoS information and/or updated first QoS information can better reflect the QoS actually obtained by the user, the charging accuracy is improved, and at the same time analysis data can be provided for a telecommunication operator to improve the QoS.

The charging method provided in the embodiments of the present invention is described in detail below with reference to two exemplary embodiments. The listed examples are only for the convenience of description, and are not intended to limit the scope of protection of the embodiments of the present invention.

### Embodiment 1

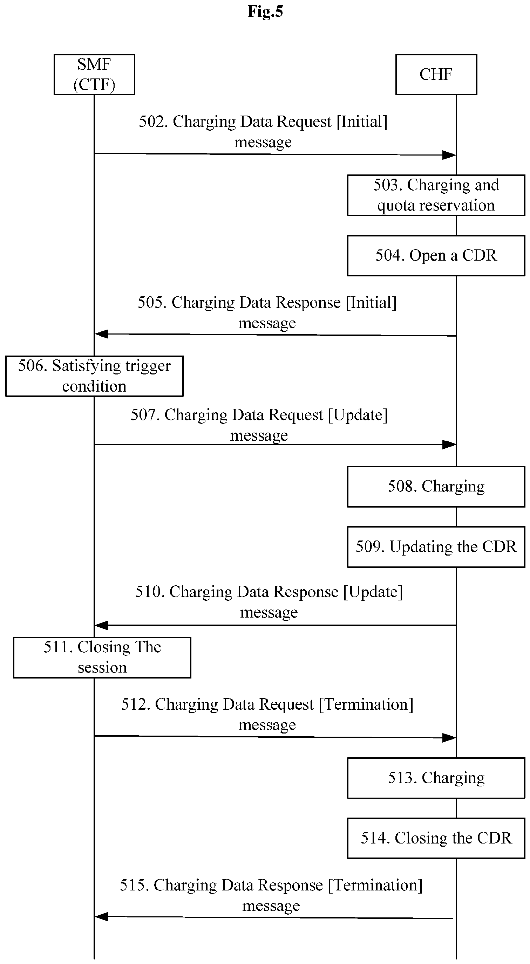

This embodiment describes a charging method for a user to normally use a 5G service. As shown in Fig. 5, the charging method includes operations which are described in detail as follows.

At 501, when a session starts, an SMF receives a resource usage request. The resource usage request includes requested QoS information or negotiated QoS information. The requested QoS information includes one or more of following information: a requested rate, a requested time delay, a requested jitter, a requested packet loss rate, etc. The negotiated QoS information includes one or more of following information: a negotiated rate, a negotiated time delay, a negotiated jitter, a negotiated packet loss rate, etc.

At 502, the SMF sends an initial Charging Data Request message (e.g., a Charging Data Request [Initial] message) to a CHF, wherein the Charging Data Request [Initial] message carries requested QoS information or negotiated QoS information.

At 503, the CHF performs control, such as charging and quota reservation, according to the information in the Charging Data Request [Initial] message.

At 504, the CHF opens a CDR and stores the information in the Charging Data Request [Initial] message into content of each field in the CDR.

At 505, the CHF replies an initial charging data response message (e.g., a Charging Data Response [Initial] message) to the SMF.

At 506, in the session process, in a case where a trigger condition (for example, the session has lasted for a certain duration, or the session has used a certain amount of traffic, etc.) is satisfied, operation 507 is executed.

At 507, the SMF sends an update charging data request message (e.g., a Charging Data Request [Update] message) to the CHF, wherein the Charging Data Request [Update] message carries the QoS information actually used after the Charging Data Request [Initial] message or the previous Charging Data Request [Update] message is sent. The QoS information actually used after the Charging Data Request [Initial] message or the previous Charging Data Request [Update] message is sent includes one or more of following information actually used after the Charging Data Request [Initial] message or the previous Charging Data Request [Update] message is sent: a maximum rate, an average rate, a maximum time delay, an average time delay, a maximum jitter, an average jitter, a maximum packet loss rate, an average packet loss rate, etc.

In this operation, the Charging Data Request [Update] message further carries other information used for charging, such as duration and traffic after the Charging Data Request [Initial] message is sent or the previous Charging Data Request [Update] message is sent.

At 508, the CHF performs operations, such as charging, according to the information in the Charging Data Request [Update] message.

At 509, the CHF updates the content of each field in the CDR according to the information in the Charging Data Request [Update] message.

At 510, the CHF replies an update charging data response message (e.g., a Charging Data Response [Update] message) to the SMF.

At 511, the user stops using the service, and the session is closed.

At 512, the SMF sends a termination charging data request message (e.g., a Charging Data Request [Termination] message) to the CHF, wherein the Charging Data Request [Termination] message carries the QoS information actually used after the last (final) Charging Data Request [Update] message is sent. The QoS information actually used after the last (final) Charging Data Request [Update] message is sent includes one or more of following information actually used after the last (final) Charging Data Request [Update] message is sent: a maximum rate, an average rate, a maximum time delay, an average time delay, a maximum jitter, an average jitter, a maximum packet loss rate, an average packet loss rate, etc.

In this operation, the Charging Data Request [Termination] message further carries other information used for charging, such as duration and traffic after the last (final) Charging Data Request [Update] message is sent.

At 513, the CHF performs operations, such as charging, according to the information in the Charging Data Request [Termination] message.

At 514, the CHF updates the content of each field in the CDR according to the information in the Charging Data Request [Termination] message, and closes the CDR.

At 515, the CHF replies a termination charging data request message (e.g., a Charging Data Request [Termination] message) to the SMF.

It should be noted that, the operations 506 to 510 may not be performed in an actual session or may be performed for multiple times.

The flow in this embodiment describes a signaling flow between the SMF and the CHF, but the actual signaling flow of the network element is not limited thereto, and other signaling interactions between the NFs embedded with the CTF and the charging network element (e.g., for offline charging/online charging/integrated charging) may also adopt the flow.

### Embodiment 2

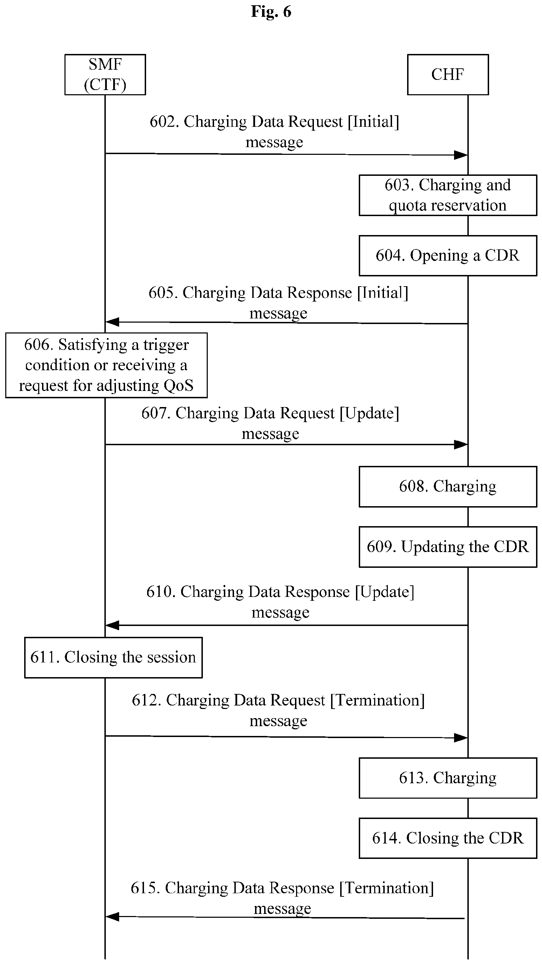

This embodiment describes a charging method for dynamically adjusting the QoS by a user or a service provider in a process that the user uses a 5G service. As shown in Fig. 6, the charging method includes the following operations which are described in detail below.

At 601, when a session starts, an SMF receives a resource usage request, wherein the resource usage request includes requested QoS information or negotiated QoS information. The requested QoS information includes one or more of following information: a requested rate, a requested time delay, a requested jitter, a requested packet loss rate, etc. The negotiated QoS information includes one or more of following information: a negotiated rate, a negotiated time delay, a negotiated jitter, a negotiated packet loss rate, etc.

At 602, the SMF sends a Charging Data Request [Initial] message to a CHF, wherein the Charging Data Request [Initial] message carries requested QoS information or negotiated QoS information.

At 603, the CHF performs control, such as charging and quota reservation, according to the information in the Charging Data Request [Initial] message.

At 604, the CHF opens a CDR and stores information in the Charging Data Request [Initial] message into content of each field in the CDR.

At 605, the CHF replies a Charging Data Response [Initial] message to the SMF.

At 606, in the session process, in a case where the SMF receives a request for adjusting the QoS from a user or a service provider, or a trigger condition (for example, the session has lasted for a certain duration, or the session has used a certain amount of traffic, etc.) is satisfied, operation 607 is performed. The request for adjusting the QoS includes updated requested QoS information or updated negotiated QoS information. The updated requested QoS information includes one or more of following updated information: a requested rate, a requested time delay, a requested jitter, a requested packet loss rate, etc. The updated negotiated QoS information includes one or more of following updated information: a negotiated rate, a negotiated time delay, a negotiated jitter, a negotiated packet loss rate, etc.

At 607, the SMF sends a Charging Data Request [Update] message to the CHF, wherein the Charging Data Request [Update] message carries actually used QoS information and updated first QoS information after the Charging Data Request [Initial] message is sent or the previous Charging Data Request [Update] message is sent. The QoS information actually used after the Charging Data Request [Initial] message is sent or the previous Charging Data Request [Update] message is sent includes one or more of following information: a maximum rate, an average rate, a maximum time delay, an average time delay, a maximum jitter, an average jitter, a maximum packet loss rate, an average packet loss rate, etc. actually used after the Charging Data Request [Initial] message or the previous Charging Data Request [Update] message is sent.

In this operation, the Charging Data Request [Update] message further carries other information used for charging, such as duration and traffic after the Charging Data Request [Initial] message is sent or the previous Charging Data Request [Update] message is sent.

At 608, the CHF performs operations, such as charging, according to the information in the Charging Data Request [Update] message.

At 609, the CHF updates the content of each field in the CDR according to the information in the Charging Data Request [Update] message.

At 610, the CHF replies a Charging Data Response [Update] message to the SMF.

At 611, the user stops using the service, and the session is closed.

At 612, the SMF sends a Charging Data Request [Termination] message to the CHF, wherein the Charging Data Request [Termination] message carries the QoS information actually used after the last (final) Charging Data Request [Update] message is sent. The QoS information actually used after the last (final) Charging Data Request [Update] message is sent includes one or more of following information actually used after the last (final) Charging Data Request [Update] message is sent: a maximum rate, an average rate, a maximum time delay, an average time delay, a maximum jitter, an average jitter, a maximum packet loss rate, an average packet loss rate, etc.

In this operation, the Charging Data Request [Termination] message further carries other information used for charging, such as duration and traffic after the last (final) Charging Data Request [Update] message.

At 613, the CHF performs operations, such as charging, according to the information in the Charging Data Request [Termination] message.

At 614, the CHF updates the content of each field in the CDR according to the information in the Charging Data Request [Termination] message, and closes the CDR.

At 615, the CHF replies a Charging Data Response [Termination] message to the SMF.

It should be noted that, in operation 606, the user may request to change the QoS through the terminal, or the service provider submits the request for changing the QoS through other handling platforms, and the exemplary implementation is not limited.

The flow in this embodiment describes a signaling flow between the SMF and the CHF, but the actual signaling flow of the network element is not limited thereto, and other signaling interactions between the NFs embedded with the CTF and the charging network element (for offline charging/online charging/integrated charging) can also adopt the flow.

Another embodiment of the present invention provides a charging device, including a processor and a computer-readable storage medium, wherein the computer-readable storage medium stores an instruction, and the instruction, when being executed by a processor, implements the foregoing charging method.

Another embodiment of the present invention provides a computer-readable storage medium, on which a computer program is stored, wherein the computer program, when being executed by a processor, implements the operations of any charging method.

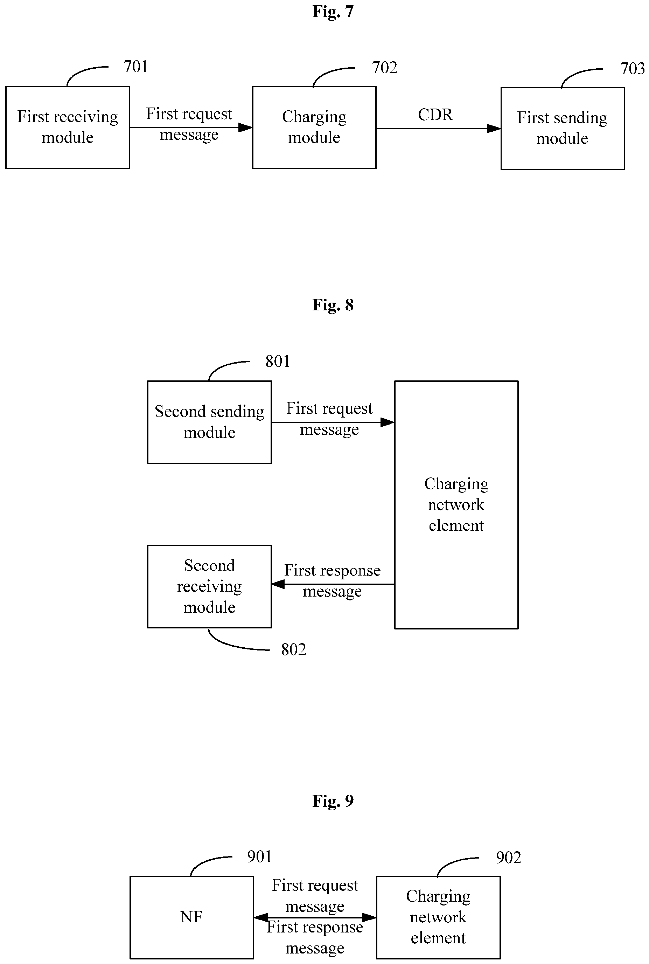

Referring to Fig. 7, another embodiment of the present invention provides a charging apparatus, including:
a first receiving component 701, configured to receive a first request message from an NF, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message; and
a charging module 702, configured to perform charging according to the QoS information carried in the first request message.

In another embodiment of the present invention, the charging module 702 is further configured to:
store the QoS information carried in the first request message into a CDR.

In another embodiment of the present invention, the charging apparatus further includes:
a first sending module 703, configured to return a first response message to the NF.

In the embodiment of the present invention, the requested QoS information includes one or more of following information:
a requested rate, a requested time delay, a requested jitter, and a requested packet loss rate.

In the embodiment of the present invention, the negotiated QoS information includes one or more of following information:
a negotiated rate, a negotiated time delay, a negotiated jitter, and a negotiated packet loss rate.

In the embodiment of the present invention, the second QoS information includes one or more of following information actually used after the NF sends a previous first request message:
a maximum rate, an average rate, a maximum time delay, an average time delay, a maximum jitter, an average jitter, a maximum packet loss rate, and an average packet loss rate.

It should be noted that the QoS information actually used refers to a specific value of the QoS information actually used. For example, in a case where the QoS information includes a maximum rate, the QoS information actually used refers to a value of the maximum rate actually used; in a case where the QoS information includes a maximum rate and an average rate, the QoS information actually used refers to a value of the maximum rate actually used and a value of the average rate actually used; other cases may be deduced by analogy.

In the embodiment of the present invention, the charging module 702 is specifically configured to perform charging according to the QoS information carried in the first request message by adopting one or more of:
performing charging according to the first QoS information or the first QoS information previously updated to obtain a charging base; calculating a charging discount according to the second QoS information; and performing final charging according to the charging base and the charging discount;
in a case where the second QoS information is lower than the first QoS information or the first QoS information previously updated, performing charging according to the first QoS information or the first QoS information previously updated to obtain a charging base; calculating a charging discount according to the second QoS information; and performing final charging according to the charging base and the charging discount;
in a case where the second QoS information is higher than the first QoS information or the first QoS information previously updated, performing charging according to the first QoS information or the first QoS information previously updated.

In the embodiment of the present invention, the first response message may be any one of the following:
an initial charging data response message, an update charging data response message, or a termination charging data response message.

The exemplary implementation process of the charging apparatus is the same as that of the charging method in the foregoing embodiment, and is not further described herein.

Referring to Fig. 8, another embodiment of the present invention provides a charging apparatus, including:
a second sending module 801, configured to send a first request message to a charging network element in a case where a preset condition is satisfied, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message.

In another embodiment of the present invention, the charging method further includes:
a second receiving module 802, configured to receive a first response message from the charging network element.

In the embodiment of the present invention, the preset condition includes any one of:
reception of a second request message;
satisfying of a trigger condition;
reception of a third request message used for or serving a provider;
closing of a session.

In the embodiment of the present invention, the requested QoS information includes one or more of following information:
a requested rate, a requested time delay, a requested jitter, and a requested packet loss rate.

In the embodiment of the present invention, the negotiated QoS information includes one or more of following information:
a negotiated rate, a negotiated time delay, a negotiated jitter, and a negotiated packet loss rate.

In the embodiment of the present invention, the second QoS information includes one or more of following information actually used after a previous first request message is sent:
a maximum rate, an average rate, a maximum time delay, an average time delay, a maximum jitter, an average jitter, a maximum packet loss rate, and an average packet loss rate.

The exemplary implementation process of the charging apparatus is the same as that of the charging method in the foregoing embodiment, and is not further described herein.

Referring to Fig. 9, another embodiment of the present invention provides a charging system, including:
an NF 901, configured to send a first request message to a charging network element in a case where a preset condition is satisfied, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message;
a charging network element 902, configured to receive the first request message from the NF, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message; and
perform charging according to the QoS information carried in the first request message.

In another embodiment of the present invention, the NF 901 is further configured to:
receive a first response message from the charging network element 901.

The charging network element 902 is further configured to perform one or more of:
store the QoS information carried in the first request message into a CDR;
return the first response message to the NF.

In the embodiment of the present invention, the requested QoS information includes one or more of following information:
a requested rate, a requested time delay, a requested jitter, and a requested packet loss rate;

In the embodiment of the present invention, the negotiated QoS information includes one or more of following information:
a negotiated rate, a negotiated time delay, a negotiated jitter, and a negotiated packet loss rate.

In the embodiment of the present invention, the second QoS information includes one or more of following information that is actually used after the NF sends a previous first request message:
a maximum rate, an average rate, a maximum time delay, an average time delay, a maximum jitter, an average jitter, a maximum packet loss rate, and an average packet loss rate.

In the embodiment of the present invention, the charging network element 902 is specifically configured to perform charging according to the QoS information carried in the first request message by adopting one or more of:
performing charging according to the first QoS information or first QoS information previously updated to obtain a charging base; calculating a charging discount according to the second QoS information; and performing final charging according to the charging base and the charging discount;
in a case where the second QoS information is lower than the first QoS information or first QoS information previously updated, performing charging according to the first QoS information or the first QoS information previously updated to obtain a charging base; calculating a charging discount according to the second QoS information; and performing final charging according to the charging base and the charging discount;
in a case where the second QoS information is higher than the first QoS information or first QoS information previously updated, performing charging according to the first QoS information or the first QoS information previously updated.

In the embodiment of the present invention, the preset condition includes any one of:
reception of a second request message;
satisfying of a trigger condition;
reception of a third request message used for or serving a provider;
closing of a session.

The exemplary implementation process of the charging system is the same as that of the charging method in the foregoing embodiment, and is not further described herein.

Those having ordinary skill in the art can appreciate that all or some of the operations of the methods disclosed above, and the functional blocks/units of the systems and apparatuses may be implemented as software, firmware, hardware, and any suitable combination thereof. In a hardware implementation, the division between functional modules/units referred to in the above description does not necessarily correspond to the division of physical components. For example, one physical component may have multiple functions, or one function or operation may be cooperatively performed by several physical components. Some or all components may be implemented as software executed by a processor, such as a digital signal processor or microprocessor, or as hardware, or as an integrated circuit, such as an application specific integrated circuit. Such software may be distributed on computer-readable media, which may include computer storage media (or non-transitory media) and communication media (or transitory media). As is well known to those having ordinary skill in the art, the term computer storage medium includes volatile and non-volatile, removable and non-removable media implemented in any method or technique for storing information (such as computer-readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, communication media typically include computer-readable instructions, data structures, program modules, or other data in a modulated data signal such as a carrier wave or other transport mechanism and may include any information delivery media as is known to those having ordinary skill in the art.

Although the implementations disclosed in the embodiments of the present invention are described above, the described contents are only implementations used for facilitating understanding of the embodiments of the present invention, and are not intended to limit the embodiments of the present invention. Those having ordinary skill in the art can make various modifications and variations to the embodiments of the present invention without departing from the principle and scope of the present invention. The scope of the present invention is defined by the appended claims.

### Industrial applicability

An embodiment of the present invention includes: receiving a first request message from an NF, wherein the first request message carries following information: first QoS information; or second QoS information; or second QoS information and updated first QoS information; the first QoS information includes requested QoS information or negotiated QoS information; and the second QoS information includes QoS information actually used after the NF sends a previous first request message; performing charging according to the QoS information carried in the first request message. The embodiments of the present invention are based on actually used QoS information and/or updated first QoS information. Since the actually used QoS information and/or updated first QoS information can better reflect the QoS actually obtained by the user, the charging accuracy is improved.

In addition, the requested QoS information includes one or more of following information: a requested rate, a requested time delay, a requested jitter, and a requested packet loss rate; the negotiated QoS information includes one or more of following information: a negotiated rate, a negotiated time delay, a negotiated jitter, and a negotiated packet loss rate. The QoS information in the embodiments of the present invention is represented by more information, which can satisfy more 5G application scenarios, thereby further improving charging accuracy.

Moreover, the QoS information actually used after the NF sends a previous first request message includes one or more of following information: a maximum rate, an average rate, a maximum time delay, an average time delay, a maximum jitter, an average jitter, a maximum packet loss rate, and an average packet loss rate actually used after the NF sends a previous first request message. The QoS information in the embodiments of the present invention is represented by more information, which can satisfy more 5G application scenarios, thereby further improving charging accuracy.

## Claims

1. A charging method, comprising:
receiving a first request message from a Network Function, NF, wherein the first request message carries following information: first Quality of Service, QoS, information; or second QoS information; or second QoS information and updated first QoS information; the first QoS information comprises requested QoS information or negotiated QoS information; and the second QoS information comprises QoS information actually used after the NF sends a previous first request message; and
performing charging according to the QoS information carried in the first request message.

2. The charging method according to claim 1, further comprising one or more of:
storing the QoS information carried in the first request message into a Charging Date Record, CDR;
returning a first response message to the NF.

3. The charging method according to claim 1 or claim 2, wherein the requested QoS information comprises one or more of following information:
a requested rate, a requested time delay, a requested jitter, and a requested packet loss rate;
the negotiated QoS information comprises one or more of following information:
a negotiated rate, a negotiated time delay, a negotiated jitter, and a negotiated packet loss rate.

4. The charging method according to claim 1 or claim 2, wherein the second QoS information comprises one or more of following information actually used after the NF sends a previous first request message:
a maximum rate, an average rate, a maximum time delay, an average time delay, a maximum jitter, an average jitter, a maximum packet loss rate, and an average packet loss rate.

5. The charging method according to claim 1 or claim 2, wherein performing charging according to the QoS information carried in the first request message comprises one or more of:
performing charging according to the first QoS information or first QoS information previously updated to obtain a charging base; calculating a charging discount according to the second QoS information; and performing final charging according to the charging base and the charging discount;
in a case where the second QoS information is lower than the first QoS information or first QoS information previously updated, performing charging according to the first QoS information or the first QoS information previously updated to obtain a charging base; calculating a charging discount according to the second QoS information; and performing final charging according to the charging base and the charging discount;
in a case where the second QoS information is higher than the first QoS information or first QoS information previously updated, performing charging according to the first QoS information or the first QoS information previously updated.

6. A charging method, comprising:
in a case where a preset condition is satisfied, sending a first request message to a charging network element, wherein the first request message carries following information: first Quality of Service, QoS, information; or second QoS information; or second QoS information and updated first QoS information; the first QoS information comprises requested QoS information or negotiated QoS information; and the second QoS information comprises QoS information actually used after a Network Function, NF, sends a previous first request message.

7. The charging method according to claim 6, further comprising:
receiving a first response message from the charging network element.

8. The charging method according to claim 6 or claim 7, wherein the preset condition comprises any one of:
reception of a second request message;
satisfying of a trigger condition;
reception of a third request message used for or serving a provider; or
closing of a session.

9. The charging method according to claim 6 or claim 7, wherein the requested QoS information comprises one or more of following information:
a requested rate, a requested time delay, a requested jitter, and a requested packet loss rate;
the negotiated QoS information comprises one or more of following information:
a negotiated rate, a negotiated time delay, a negotiated jitter, and a negotiated packet loss rate.

10. The charging method according to claim 6 or claim 7, wherein the second QoS information comprises one or more of following information actually used after a previous first request message is sent:
a maximum rate, an average rate, a maximum time delay, an average time delay, a maximum jitter, an average jitter, a maximum packet loss rate, and an average packet loss rate.

11. A charging device, comprising a processor and a computer-readable storage medium, wherein the computer-readable storage medium stores an instruction, and the instruction, when being executed by the processor, implements the charging method according to any one of claims 1 to 10.

12. A computer-readable storage medium, on which a computer program is stored, wherein the computer program, when being executed by a processor, implements operations of the charging method according to any one of claims 1 to 10.

13. A charging apparatus, comprising:
a first receiving module, configured to receive a first request message from a Network Function, NF, wherein the first request message carries following information: first Quality of Service, QoS, information; or second QoS information; or second QoS information and updated first QoS information; the first QoS information comprises requested QoS information or negotiated QoS information; and the second QoS information comprises QoS information actually used after the NF sends a previous first request message; and
a charging module, configured to perform charging according to the QoS information carried in the first request message.

14. A charging apparatus, comprising:
a second sending module, configured to send a first request message to a charging network element in a case where a preset condition is satisfied, wherein the first request message carries following information: first Quality of Service, QoS, information; or second QoS information; or second QoS information and updated first QoS information; the first QoS information comprises requested QoS information or negotiated QoS information; and the second QoS information comprises QoS information actually used after a Network Function, NF, sends a previous first request message.

15. A charging system, comprising:
a Network Function, NF, configured to send a first request message to a charging network element in a case where a preset condition is satisfied, wherein the first request message carries following information: first Quality of Service, QoS, information; or second QoS information; or second QoS information and updated first QoS information; the first QoS information comprises requested QoS information or negotiated QoS information; and the second QoS information comprises QoS information actually used after the NF sends a previous first request message; and
a charging network element, configured to receive the first request message from the NF, wherein the first request message carries the following information: first QoS information; or second QoS information; or second QoS information and updated first QoS information; the first QoS information comprises requested QoS information or negotiated QoS information; and the second QoS information comprises QoS information actually used after the NF sends a previous first request message; and
perform charging according to the QoS information carried in the first request message.
